Europäisches Patentamt

European Patent Office

Office européen des brevets

(11) Numéro de publication : **0 533 765 B1**

(12) **FASCICULE DE BREVET EUROPEEN**

(45) Date de publication du fascicule du brevet :
29.12.93 Bulletin 93/52

(51) Int. Cl.⁵ : **G01V 3/08, F42C 13/08**

(21) Numéro de dépôt : **91911037.9**

(22) Date de dépôt : **04.06.91**

(86) Numéro de dépôt international :
**PCT/FR91/00442**

(87) Numéro de publication internationale :
**WO 91/20000 26.12.91 Gazette 91/29**

(54) DISPOSITIF DE DETECTION MAGNETIQUE POUR MINES A ORIN FERROMAGNETIQUES.

(30) Priorité : **15.06.90 FR 9007511**

(43) Date de publication de la demande :
**31.03.93 Bulletin 93/13**

(45) Mention de la délivrance du brevet :
**29.12.93 Bulletin 93/52**

(84) Etats contractants désignés :
**DE GB IT SE**

(56) Documents cités :
**DE-A- 3 804 495**
**FR-A- 2 495 762**
**GB-A- 2 005 834**
**US-A- 3 967 261**

(73) Titulaire : **THOMSON-CSF**
**51, Esplanade du Général de Gaulle**
**F-92800 Puteaux (FR)**

(72) Inventeur : **CERTENAIS, Joel**
**17, rue Amiral-Ronarc'h**
**F-29260 Lesneven (FR)**

(74) Mandataire : **Desperrier, Jean-Louis**
**THOMSON-CSF SCPI B.P. 329 50, rue**
**Jean-Pierre Timbaud**
**F-92402 Courbevoie Cédex (FR)**

## Description

Le domaine de l'invention est celui de la détection magnétique de structures ferromagnétiques, notamment de bâtiments navals, à partir d'un capteur magnétique présentant une certaine mobilité, par exemple étant susceptible de se déplacer de façon aléatoire en tout point d'une surface ou portion de surface (quadrique, en terme mathématique) prédéterminée.

Plus précisément, la présente invention concerne la détection de bâtiments navals par un capteur magnétique associé par exemple à une mine à orin.

De façon connue, on utilise des capteurs pour la détection de navires ou de sous-marins passant à proximité de mines, ainsi que pour la commande de ces mines dans le but de procéder à la destruction des bâtiments. De telles mines peuvent notamment être des mines de fond ou des mines à orin.

Les mines de fond sont des mines arrimées au fond d'une mer ou d'un océan et sont donc fixes.

Les mines à orin, au contraire, sont fixées au fond de l'océan à l'aide d'un câble métallique appelé orin de telle sorte qu'elles sont situées entre deux eaux. Ces mines sont affectées d'un mouvement pendulaire dû au courant, à la houle, etc... Elles se déplacent donc de façon non prévisible, sur une "surface" constituée par une portion de sphère de rayon de courbure égal à la longueur de l'orin.

Le capteur peut par exemple être constitué par un magnétomètre triaxial. Dans ce cas, la détection des navires croisant à proximité repose sur le principe d'observation d'une variation du module du champ magnétique, à savoir $(B_x^2 + B_y^2 + B_z^2)^{\frac{1}{2}}$ avec $B_x$, $B_y$, $B_z$ correspondant aux valeurs du champ magnétique suivant les directions x, y et z.

Un tel principe ne pose aucun problème en l'absence de perturbation du champ magnétique local, c'est-à-dire en l'absence de masse ferromagnétique parasite à proximité du capteur, même lorsque le capteur est mobile, puisque le module restera constant tant que le capteur ne sera soumis qu'à l'influence du champ magnétique terrestre.

En revanche, en présence d'une masse ferromagnétique parasite telle que celle de la mine, le module mesuré dépendra de la position relative de la mine et du capteur dans le champ magnétique terrestre local déformé par la masse parasite.

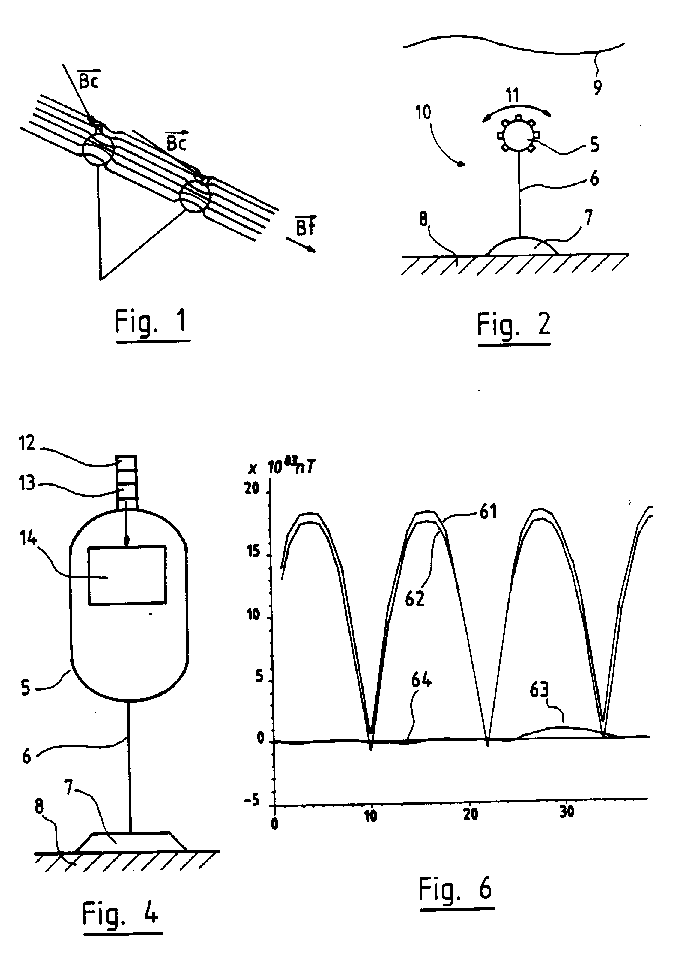

Plus précisément, du fait que les mines à orin comprennent des matériaux férromagnétiques. elles produisent une modification du champ magnétique apparent dans l'environnement de la mine. en raison du champ magnétique induit dû à la présence de ces matériaux ferromagnétiques. Or, si le capteur est arrimé sur une telle mine à orin. il se trouvera dans une position relative variable par rapport à la mine, en prenant comme axes de référence un repère fixe par rapport au champ magnétique terrestre $\vec{B_t}$ (fig.1). Il en résulte que le capteur se trouvera soumis à un champ magnétique $\vec{B_c}$ de direction et d'intensité variables, suivant la position de la mine, du fait de la perturbation locale du champ.

On a déjà cru pouvoir résoudre ce type de problème en prévoyant un capteur de position sur la mine. Dans ce cas, il est alors en effet possible de mémoriser au préalable, pour chaque position de la mine, l'effet perturbateur du champ magnétique induit, puis d'effectuer en temps réel une correction de la mesure réalisée par le capteur, de la valeur de l'effet perturbateur mémorisée correspondant à la position spatiale courante (attitude) de la mine. Toutefois, cette solution présente plusieurs inconvénients, puisqu'elle impose de prévoir un capteur de position, et qu'elle ne permet pas de tenir compte d'éventuelles modifications dans le temps de l'effet des perturbations (dues par exemple au vieillissement. et aux modifications des propriétés ferromagnétiques de la mine).

Une autre solution consiste à fabriquer des mines à orin ne comportant pas de matériau terromagnétique et de les munir de capteurs magnétiques. Cependant. la fabrication de nouvelles mines est onéreuse et, de plus, les anciennes mines ferromagnétiques ne peuvent être utilisées en tant que mines à orin.

On connaît en outre du brevet allemand DE 38 04495 l'idée de déclencher une mine anti-char en détectant simultanément le bruit et la perturbation magnétique dus au char. Bien entendu une telle mine ne bouge pas et n'est donc pas soumise à un champ magnétique perturbateur.

On connaît enfin de la demande de brevet européen 0 041 892 l'idée de compenser les perturbations magnétiques d'un compas magnétique d'avion ou de véhicule terrestre à partir d'un modèle du véhicule porteur du compas. Cette technique est très éloignée de celle des mises à feu de mines. Par ailleurs elle fonctionne en continu et non par étapes successives.

La présente invention a notamment pour objectif de pallier les inconvénients de l'état de la technique précité.

Plus précisément, un des objectifs de l'invention est de mettre en oeuvre un dispositif de détection magnétique montable sur un support mobile, comme par exemple une mine à orin ferromagnétique.

2

Un objectif complémentaire de la présente invention est de permettre la détection de bâtiments par un dispositif embarqué sur une mine à orin sans nécessiter de capteur d'attitude de la mine.

Un autre objectif de l'invention est de fournir un tel dispositif qui puisse tenir compte des modifications du champ magnétique perturbateur, et plus généralement permettre une auto-adaptation des corrections de mesure en fonction de l'environnement perturbateur réel.

Ces objectifs, ainsi que d'autres qui apparaîtront par la suite, sont atteints grâce à un dispositif de détection magnétique de structures ferromagnétiques, du type constitué d'un magnétomètre triaxial monté sur un support mobile, notamment sur une mine à orin, dont l'information de mesure est perturbée en fonction du mouvement du support, notamment de l'attitude de la mine, comportant un module de détection compensée coopérant d'une part avec le magnétomètre et d'autre part avec un module de mémorisation d'informations de compensation de l'information de mesure fournie par le magnétomètre. les informations de compensation étant élaborées et/ou mises à jour au cours d'un processus d'apprentissage consistant à modéliser les perturbations à partir des seules informations du magnétomètre.

Avantageusement, le dispositif selon l'invention comporte des moyens de détection acoustique de bâtiments navals comprenant un capteur acoustique commandant alternativement deux états de fonctionnement du dispositif:

- un premier état d'autorisation de mise en oeuvre du processus d'apprentissage lorsque le capteur acoustique délivre un signal inférieur à un seuil de détection acoustique;
- un deuxième état d'interdiction de mise en oeuvre du processus d'apprentissage lorsque le capteur acoustique délivre un signal supérieur au seuil de détection acoustique.

Préférentiellement, le seuil de détection acoustique est une valeur prédéterminée.

Selon un autre mode de mise en oeuvre de la présente invention, le seuil de détection acoustique est une valeur élaborée à partir de mesures acoustiques effectuées périodiquement.

Avantageusement, le dispositif selon l'invention comporte des moyens de mise en oeuvre périodique du processus d'apprentissage pour permettre une modélisation périodique des perturbations, ces moyens coopérant avec les moyens de détection acoustique.

Préférentiellement, la modélisation effectuée consiste à déterminer les coefficients d'un tenseur 3 x 3 représentatif de l'influence perturbatrice du support dans l'espace, la détermination étant effectuée au moyen d'une pluralité de mesures du champ magnétique local, de façon à obtenir une succession de valeurs vérifiant dans les trois dimensions l'équation :

$$\vec{B}_c = M\vec{B}_t$$

avec :

$\vec{B}_c$ : champ magnétique mesuré par le magnétomètre;

$\vec{B}_t$ : champ magnétique terrestre local non perturbé.

Avantageusement, le module de détection compensée fournit une information de module compensé suivant la formule :

$$|B|^2 = B^*{}_c Y B_c,$$

avec :

- $Y = M^{*-1} . M^{-1}$
- $|B|^2$ : module du champ magnétique mesuré compensé.

D'autres caractéristiques et avantages de la présente invention apparaîtront à la lecture de la description suivante d'un mode de mise en oeuvre préférentiel de l'invention, donné à titre explicatif et non limitatif, et des dessins annexés dans lesquels:

-

    la figure 1 représente deux vecteurs $\vec{B}_c$ caractéristiques du champ magnétique mesuré dans l'environnement d'une mine à orin dans deux positions distinctes.
- la figure 2 représente une mine à orin du type existant.
- la figure 3 représente les variations des trois angles d'Euler d'une mine à orin animée d'un mouvement pendulaire.
- la figure 4 représente une mine à orin munie du dispositif selon la présente invention.
- la figure 5 représente un mode de mise en oeuvre préférentiel du dispositif selon la présente invention.
- la figure 6 représente divers modules de champs magnétiques mesurés dans l'environnement d'une mine à orin animée d'un mouvement pendulaire.

La figure 6 représente divers modules de champs magnétiques mesurés dans l'environnement d'une mine à orin animée d'un mouvement pendulaire.

Ce module peut notamment être mesuré à l'aide d'un magnétomètre triaxial monté sur une mine à orin. Un exemple des variations mesurées est représenté par la courbe 61 de la figure 6.

La courbe 61 présente une périodicité d'environ 11 secondes due à la houle. Les variations de champ magnétique mesuré sont très importantes par rapport au champ 63 créé par un bâtiment passant à proximité: elles atteignent 19000 nT pour quelques centaines de nT à détecter.

La figure 2 représente une mine à orin du type existant.

La mine 5 est solidaire d'une extrémité d'un câble en acier 6 encore appelé orin. L'autre extrémité de l'orin 6 est fixée à un crapaud 7 solidarisé du fond 8 d'une mer, d'un océan, ou d'un cours d'eau (fleuve, canal,...). La mine à orin 10 est située entre deux eaux, entre la surface 9 de l'eau et le fond 8. Elle est animée d'un mouvement 11 pendulaire dû aux courants, aux marées et à la houle. Son centre de gravité se déplace ainsi sur une "surface" sphérique dont le rayon de courbure est égal à la longueur de l'orin 6.

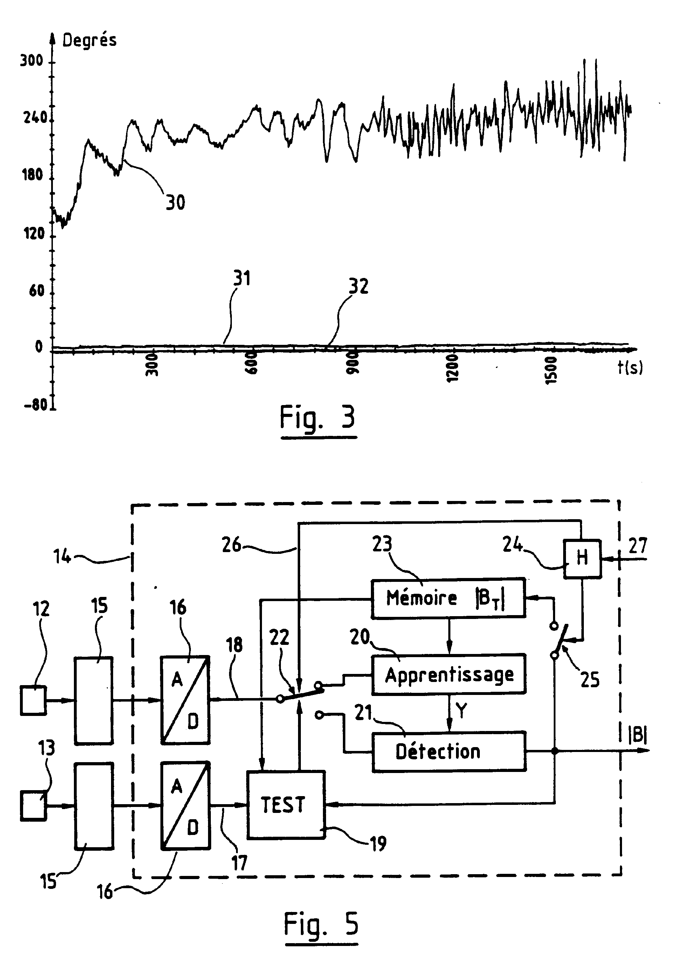

La figure 3 représente les variations des 3 angles d'Euler d'une mine à orin animée d'un tel mouvement pendulaire.

L'axe des abscisses est gradué en secondes et l'axe des ordonnées en degrés. La courbe 30 représente les variations de l'angle Théta dues à la houle de période proche de 10 secondes (variations de second degré) et le mouvement pendulaire de période plus importante (variations de premier degré). Le mouvement pendulaire correspond à la fréquence propre d'oscillation de la mine à orin dans l'eau.

Les courbes 31 (angle Phi) et 32 (angle Psi) correspondent à des variations d'angle dans le plan perpendiculaire au mouvement de la mine (32) et à la rotation de la mine autour de l'orin (31).

La courbe 30 présente une augmentation de la fréquence du mouvement pendulaire provoquée par l'apparition d'un courant dû à une marée.

La figure 4 représente une mine à orin munie d'un dispositif de détection selon la présente invention.

La mine 5 est munie d'un capteur magnétique, notamment d'un magnétomètre triaxial 12 mesurant le champ magnétique dans l'entourage de la mine 5. Le magnétomètre triaxial délivre des données représentatives du champ magnétique mesuré dans les trois directions x, y et z. Le champ magnétique mesuré se présente donc sous la forme d'un vecteur ayant trois composantes. La mine 5 comprend également un capteur acoustique 13, consistant avantageusement en un hydrophone, mesurant le niveau acoustique dans l'entourage de la mine 5. Le magnétomètre triaxial 12 et l'hydrophone 13 fournissent des signaux électriques qui sont filtrés puis amplifiés et transmis à un bloc 14 de traitement de signal.

Le bloc 14 est chargé de mettre en oeuvre un procédé tel que décrit ci-après.

Le champ magnétique brut mesuré par le magnétomètre triaxial 12 est $\vec{B}_c$. La valeur de ce champ est liée au champ magnétique $\vec{B}_t$ non perturbé par les mouvements de la mine 5 que l'on veut obtenir par la relation:

$$\vec{B}_c = M.\vec{B}_t \qquad (1)$$

où M est un tenseur de polarisation 3x3 fonction de la mine 5. Les composantes du tenseur M sont inconnues. Le processus mis en oeuvre par le dispositif a pour fonction de permettre de connaître le module du champ magnétique $B_t$ comme si la mine 5 n'était pas présente.

En utilisant la notation * pour la matrice transposée, on a la relation:

$$|B_t^2| = B_t * B_t$$

Il vient donc:

$$|B_t^2| = B_c * M *^{-1} M^{-1} B_c = B_c * Y B_c \qquad (2)$$

avec $Y = M *^{-1} M^{-1}$

Ainsi, la connaissance de la matrice Y permet d'obtenir $|B_t|$ à partir des mesures de $\vec{B}_c$ et de déterminer le tenseur de polarisation M afin d'éliminer les effets des mouvements de la mine.

Selon une caractéristique essentielle de l'invention, la matrice Y est obtenue par apprentissage. L'apprentissage effectué consiste à mesurer le champ magnétique $\vec{B}_c$ pour une pluralité de positions différentes de la mine, de façon à obtenir toutes les composantes du tenseur à partir de la résolution d'un jeu d'équations tirées de la formule (1), et pour un module du champ $B_t$ donné. Ce module est notamment connu en l'absence de perturbations du champ magnétique par un bâtiment naval, c'est à dire lorsqu'aucun bâtiment n'est détecté

par le capteur acoustique, et donc par déduction, par le magnétomètre 12. Ce champ correspond au champ magnétique terrestre.

La figure 5 représente un mode de mise en oeuvre préférentiel d'un tel bloc 14 de traitement de signal.

Les signaux provenant des capteurs 12 et 13 sont filtrés puis amplifiés par les modules 15 avant d'être numérisés par des modules de conversion analogique/numérique 16 pour faciliter leur traitement ultérieur.

Le signal 18 provenant du capteur magnétique 12 est transmis soit à un module d'apprentissage 20, soit à un module de détection 21 selon la position d'un commutateur 22. La position du commutateur 22 est commandée par un module de test 19 de telle sorte que le dispositif alterne automatiquement des phases d'apprentissage et des phases de détection.

La phase d'apprentissage est celle pendant laquelle les composantes de la matrice Y sont calculées par le module d'apprentissage 20.

Le calcul de Y s'effectue pendant que le commutateur 22 permet aux signaux 18 d'entrer dans le module d'apprentissage 20. Ce calcul est effectué grâce à la relation:

$$|B_t|^2 = B^*_c Y B_c$$

Le module d'apprentissage 20 fournit la matrice Y calculée au module de détection 21. Le module de détection 21 fournit à sa sortie la valeur du module du champ magnétique B mesuré dans l'environnement de la mine. Ce champ magnétique est constitué par la superposition du champ magnétique terrestre $B_t$ et d'un éventuel autre champ $B_p$ créé par une perturbation due à un bâtiment naval.

En fonction de la valeur de B, et plus précisément de la présence ou non de la composante $B_p$, on prévoit alors ou non l'activation de la mine.

Le module de test 19 effectue simultanément deux comparaisons:
- le signal acoustique 17 fourni par le capteur acoustique 13 est comparé avec une valeur de seuil acoustique en mémoire;
- la mesure de $|B|$ est comparée avec une valeur de champ magnétique en mémoire précédemment enregistrée.

La valeur de seuil acoustique correspond à celle d'un niveau acoustique ambiant dans l'environnement de la mine 5. Cette valeur peut être soit fixée une fois pour toutes, soit résulter d'un apprentissage périodique du niveau acoustique ambiant.

La valeur de champ magnétique en mémoire 23, comparée avec la mesure de B, correspond à un seuil ajusté périodiquement au cours du temps. Cet ajustement périodique consiste à mettre la valeur de $|B_t|$ ( $|B_p|$ = 0) en mémoire et à la comparer périodiquement à la valeur précédente. La mise en mémoire 23 est réalisée par basculement de l'interrupteur 25 commandé par une horloge 24. La périodicité de l'horloge 24 est réglée pour tenir compte de la durée de vie de la mine et de l'énergie embarquée disponible. Cette période peut être de l'ordre de quelques jours à une ou plusieurs semaines, selon l'énergie embarquée disponible.

L'apprentissage est effectué automatiquement et périodiquement pour réaliser une mise à jour du tenseur M. Cette mise à jour est rendue nécessaire pour la prise en compte du vieillissement de la mine, des marées et des variations de hauteur d'eau au-dessus de la mine entraînant des variations de pression.

La mise à jour s'effectue grâce à un ordre 26 de commande de changement de phase permettant au dispositif de passer en phase de détection. La valeur de sortie du module 21 de détection peut alors être mémorisée dans le module 23 par fermeture de l'interrupteur 25 commandé par un ordre 27 via l'horloge 24. L'ordre 27 est provoqué par des moyens non représentés permettant la détection d'une modification de la valeur du champ mesuré en l'absence d'un signal acoustique délivré par l'hydrophone 13.

L'apprentissage est réalisé aussi longtemps que le signal 17 représentatif du bruit ambiant n'excède pas la valeur acoustique de seuil en mémoire.

Lorsqu'aucun bruit n'a été détecté depuis un certain temps, afin de réaliser des économies d'énergie, le dispositif est déconnecté de la source d'alimentation, à l'exception du capteur acoustique 13. Ceci correspond à une mise en état de veille du dispositif.

Le module de détection 21 calcule le module du champ magnétique B en tenant compte de la matrice Y calculée par le module d'apprentissage 20. La valeur fournie en sortie est comparée avec la valeur en mémoire 23 par le module de test 19 pendant un certain temps, par exemple 30 secondes. Cette comparaison a pour objectif d'obtenir une mesure absolue du champ magnétique pour pouvoir quantifier la mesure effectuée (étalonnage de la sensibilité).

Pendant ce temps, le signal 17 provenant de l'hydrophone est comparé avec la valeur de seuil acoustique en mémoire.

Lorsque le signal 17 provenant du capteur acoustique 13 dépasse le seuil acoustique en mémoire, le dispositif passe automatiquement en phase de mesure par commutation du commutateur 22.

Ainsi, la phase d'apprentissage est-elle mise en oeuvre d'une part en l'absence de signaux acoustiques de valeurs supérieures à un seuil et d'autre part avec une valeur $|B|$ proche de la valeur idéale qui est celle du champ magnétique terrestre sur le site ($|B_p|$ =0).

La matrice Y est une matrice 3x3 et comporte donc neuf coefficients. Ainsi, neuf équations à neuf inconnues suffisent pour trouver les neuf coefficients. Une caractéristique importante de la présente invention consiste à considérer un nombre d'équations supérieur à neuf pour la détermination des coefficients de Y. Le système considéré est alors surdimensionné afin d'être moins sensible aux divers bruits de mesure. La résolution du système est avantageusement effectuée par la méthode des moindres carrés, connaissant le champ magnétique terrestre local dans l'environnement de la mine non perturbé. Le temps de convergence du système dépend de l'amplitude et de la fréquence des mouvements de la mine. La durée d'apprentissage est donc variable et se termine lorsque les variations du champ mesuré sont inférieures à un certain pourcentage du champ magnétique mesuré (fonction des mouvements de la mine et du champ magnétique terrestre).

La figure 6 est une simulation illustrant la mise en oeuvre du procédé de correction de l'invention. Le tracé 61 correspond au champ magnétique mesuré par le capteur d'une mine à orin, en l'absence de correction. Le tracé 64 de la figure 6 représente le module du champ magnétique corrigé obtenu avec la méthode de l'invention.

La courbe 62 représente les variations du module du champ magnétique mesuré par un magnétomètre triaxial monté sur une mine à orin, l'effet du champ permanent ayant été éliminé. Le module de $B_t$ en sortie du bloc de traitement 14, obtenu en l'absence de perturbation, présente des variations inférieures à 50 nT. Ces faibles variations permettent de détecter une modification 63 de module du champ magnétique 3 créé par un bâtiment, notamment un navire ou sous-marin, passant à proximité de la mine 5, l'amplitude de la modification 63 étant supérieure au "bruit résiduel" 64.

Le processus de traitement mis en oeuvre présente ainsi l'avantage de permettre la connaissance de M (en fait Y) sans nécessiter l'utilisation d'un capteur d'attitude de la mine.

**Revendications**

1. Dispositif de détection magnétique de structures ferromagnétiques, du type comportant un magnétomètre triaxial (12) monté sur un support mobile, dont l'information de mesure est perturbée en fonction du mouvement du support, et comportant un module de détection (21) compensée destiné à coopérer d'une part avec ledit magnétomètre (12) et d'autre part avec un module (23) de mémorisation d'informations de compensation de l'information de mesure fournie par ledit magnétomètre (12), pour élaborer et/ou mettre à jour lesdites informations de compensation au cours d'un processus d'apprentissage consistant à modéliser lesdites perturbations à partir des seules informations dudit magnétomètre (12), caractérisé en ce que ce dispositif est monté sur une mine à orin et en ce qu'il comporte en outre des moyens de détection acoustique de bâtiments navals comprenant un capteur acoustique (13) pour commander alternativement deux états de fonctionnement dudit dispositif :
   - un premier état d'autorisation de mise en oeuvre dudit processus d'apprentissage et d'interdiction du fonctionnement pour la mise à feu de la mine lorsque ledit capteur acoustique (13) déllvre un signal (17) inférieur à un seuil de détection acoustique ;
   - un deuxième état d'interdiction de mise en oeuvre dudit processus d'apprentissage et d'autorisation du fonctionnement pour la mise à feu de la mine lorsque ledit capteur acoustique (13) délivre un signal (17) supérieur audit seuil de détection acoustique.

2. Dispositif selon la revendication 1 caractérisé en ce que ledit seuil de détection acoustique est une valeur prédéterminée.

3. Dispositif selon la revendication 1 caractérisé en ce que ledit seuil de détection est une valeur élaborée à partir de mesures acoustiques effectuées périodiquement.

4. Dispositif selon l'une quelconque des revendications 1 à 3 caractérisé en ce qu'il comporte des moyens (19) de mise en oeuvre périodique dudit processus d'apprentissage pour permettre une modélisation périodique desdites perturbations, lesdits moyens (19) coopérant avec lesdits moyens (13) de détection acoustique.

5. Dispositif selon la revendication 4 caractérisé en ce que ladite modélisation consiste à déterminer les coefficients d'un tenseur 3 x 3 (M) représentatif de l'influence perturbatrice dudit support dans l'espace, ladite détermination étant effectuée au moyen d'une pluralité de mesures du champ magnétique local, de façon à obtenir une succession de valeurs vérifiant dans les trois dimensions l'équation :

$$\vec{B}_c = M\vec{B}_t$$

avec :

$\vec{B}_c$ : champ magnétique mesuré par le magnétomètre (12);

$\vec{B}_t$ : champ magnétique terrestre local non perturbé.

6. Dispositif selon la revendication 5 caractérisé en ce que ledit module (21) de détection compensée fournit une information de module compensé suivant la formule :

$$|B|^2 = B^*{}_c\, Y\, B_c,$$

avec :
- $Y = M^{*-1} . M^{-1}$
- $|B|^2$ : module du champ magnétique mesuré compensé.


**Patentansprüche**

1. Einrichtung zur magnetischen Erfassung von ferromagnetischen Strukturen des Typs, der versehen ist mit einem dreiachsigen Magnetometer (12), das auf einem beweglichen Träger angebracht ist und dessen Meßinformation in Abhängigkeit von der Bewegung des Trägers gestört wird, sowie mit einem Modul (21) zur kompensierten Erfassung, der dazu bestimmt ist, einerseits mit dem Magnetometer (12) und andererseits mit einem Modul (23) zur Speicherung von Informationen zur Kompensation der vom Magnetometer (12) gelieferten Meßinformation zusammenzuwirken, um während eines Lernprozesses die Kompensationsinformationen zu erstellen und/oder zu aktualisieren, wobei der Lernprozeß darin besteht, die Störungen ausschließlich anhand der Informationen des Magnetometers (12) nachzubilden, dadurch gekennzeichnet, daß diese Einrichtung auf einer Ankermine angebracht ist und daß sie außerdem Mittel zur akustischen Erfassung von Schiffen aufweist, die einen Schallwandler (13) enthalten, um alternativ zwei Betriebszustände der Einrichtung zu steuern:
   - einen ersten Zustand, in dem die Ausführung des Lernprozesses zugelassen und der Betrieb zum Zünden der Mine verboten ist, wenn der genannte Schallwandler (13) ein Signal (17) ausgibt, das kleiner als ein Schallerfassung-Schwellenwert ist;
   - einen zweiten Zustand, in dem die Ausführung des Lemprozesses verboten und der Betrieb zum Zünden der Mine zugelassen ist, wenn der genannte Schallwandler (13) ein Signal (17) ausgibt, das größer als der Schallerfassung-Schwellenwert ist.

2. Einrichtung gemäß Anspruch 1, dadurch gekennzeichnet, daß der Schallerfassung-Schwellenwert ein vorgegebener Wert ist.

3. Einrichtung gemäß Anspruch 1, dadurch gekennzeichnet, daß der Erfassungsschwellenwert ein Wert ist, der ausgehend von periodisch ausgeführten Schallmessungen erstellt wird.

4. Einrichtung gemäß einem der Ansprüche 1 bis 3, dadurch gekennzeichnet, daß sie Mittel (19) zum periodischen Ausführen des Lernprozesses enthält, um eine periodische Nachbildung der Störungen zu ermöglichen, wobei die Mittel (19) mit den Schallerfassungsmitteln (13) zusammenwirken.

5. Einrichtung gemäß Anspruch 4, dadurch gekennzeichnet, daß die Nachbildung darin besteht, die Koeffizienten eines 3x3-Tensors (M) zu bestimmen, welcher den störenden Einfluß des Trägers im Raum darstellt, wobei die Bestimmung mittels mehrerer Messungen des lokalen Magnetfeldes bewerkstelligt wird, derart, daß eine Folge von Werten erhalten wird. die in den drei Dimensionen die folgende Gleichung erfüllen:

$$\vec{B}_c = M\, \vec{B}_t$$

mit:

$\vec{B}_c$ : vom Magnetometer (12) gemessenes Magnetfeld;

$\vec{B}_t$ : nicht gestörtes, lokales Erdmagnetfeld.

6. Einrichtung gemäß Anspruch 5, dadurch gekennzeichnet, daß der Modul (21) zur kompensierten Erfassung eine Information des kompensierten Betrags gemäß der Formel

$$|B|^2 = B_c^* Y B_c$$

liefert, mit:
- $Y = M^{*-1} \cdot M^{-1}$
- $|B|^2$ : Betrag des kompensierten gemessenen Magnetfeldes.

## Claims

1. Device for magnetic detection of ferromagnetic structures, of the type comprising a triaxial magnetometer (12) mounted on a mobile support and whose measurement information is disturbed as a function of the movement of the support, and comprising a compensated detection unit (21) intended to cooperate on the one hand with the said magnetometer (12) and on the other hand with a unit (23) for storing compensation information for the measurement information supplied by the said magnetometer (12) in order to generate and/or update the said compensation information during a learning process consisting in modelling the said disturbances on the basis of information from the said magnetometer (12) only, characterized in that this device is mounted on a moored mine and in that it furthermore comprises acoustic means of detection of naval ships comprising an acoustic sensor (13) in order to alternately control two operating states of the said device:
   - a first state of enabling the use of the said learning process and inhibiting the functioning for firing the mine when the said acoustic sensor (13) is supplying a signal (17) less than an acoustic detection threshold;
   - a second state of inhibiting the use of the said learning process and enabling the functioning for firing the mine when the said acoustic sensor (13) is supplying a signal (17) greater than the said acoustic detection threshold.

2. Device according to Claim 1, characterized in that the said acoustic detection threshold is a predetermined value.

3. Device according to Claim 1, characterized in that the said detection threshold is a value generated from periodically taken acoustic measurements.

4. Device according to any one of Claims 1 to 3, characterized in that it comprises means (19) of periodic use of the said learning process in order to allow periodic modelling of the said disturbances, the said means (19) cooperating with the said acoustic detection means (13).

5. Device according to Claim 4, characterized in that the said modelling consists in determining the coefficients of a 3 x 3 tensor (M) representative of the disturbing influence of the said support in space, the said determination being carried out by means of a plurality of measurements of the local magnetic field, in order to obtain a succession of values verifying the following equation in all three dimensions:

$$\vec{B}_c = M\vec{B}_t$$

where:

$\vec{B}_c$ : magnetic field measured by the magnetometer (12);

$\vec{B}_t$ : local non-disturbed terrestrial magnetic field.

6. Device according to Claim 5, characterized in that the said compensated detection unit (21) supplies compensated modulus information according to the formula:

$$|B|^2 = B^*_c Y B_c,$$

where:

$Y = M^{*-1}.M^{-1}$

$|B|^2$ = Modulus of the compensated measured magnetic field.

$\overrightarrow{Bc}$

$\overrightarrow{Bc}$

$\overrightarrow{Bf}$

## Fig. 1

9

11

10

5

6

8

7

## Fig. 2

12

13

14

5

6

7

8

## Fig. 4

$x \ 10^{83} nT$

20

15

10

5

0

-5

61

62

64

63

0

10

20

30

## Fig. 6

Fig. 3

Fig. 5